Europäisches Patentamt

European Patent Office

Office européen des brevets

(19)

(11) Veröffentlichungsnummer: **0 171 700**
**B1**

(12) **EUROPÄISCHE PATENTSCHRIFT**

(45) Veröffentlichungstag der Patentschrift: 04.04.90

(51) Int. Cl.⁵: **B 23 Q 1/26, F 16 C 29/06**

(21) Anmeldenummer: **85109547.1**

(22) Anmeldetag: **30.07.85**

(54) Einstellbare Wälzkörperumlauf-Geradführung.

(30) Priorität: **14.08.84 DE 3429897**
**17.10.84 DE 3438059**

(43) Veröffentlichungstag der Anmeldung:
**19.02.86 Patentblatt 86/08**

(45) Bekanntmachung des Hinweises auf die
Patenterteilung:
**04.04.90 Patentblatt 90/14**

(84) Benannte Vertragsstaaten:
**CH DE FR GB IT LI**

(56) Entgegenhaltungen:
**EP-A-0 017 960**
**CH-A- 477 635**
**DE-A-2 346 633**
**DE-A-3 429 692**
**FR-A-1 243 926**
**US-A-3 320 005**
**US-A-3 389 625**
**US-A-4 120 538**
**US-A-4 332 426**

(73) Patentinhaber: **MAHO Aktiengesellschaft**
**Postfach 1280 Tiroler Strasse 85**
**D-8962 Pfronten (DE)**

(72) Erfinder: **Schwarz, Walter**
**Auf der Herze 1**
**D-8962 Pfronten (DE)**

(74) Vertreter: **Patentanwälte Beetz sen. - Beetz jun.**
**Timpe - Siegfried - Schmitt-Fumian**
**Steinsdorfstrasse 10**
**D-8000 München 22 (DE)**

Courier Press, Leamington Spa, England.

**Beschreibung**

Die Erfindung betrifft eine einstellbare Wälzkörperumlauf-Geradführung für insbesondere Werkzeugmaschinen der im Oberbegriff des Patentanspruchs 1 angegebenen Gattung.

Geradführungen haben insbensondere bei Werkzeugmaschinen die Aufgabe, die die Vorschubbewegungen ausführenden Bauteile, wie Schlitten, Spindelstock u. dgl., in einer exakten Bewegungsbahn zu halten sowie die Gewichtskräfte von Schlitten und Werkstück zu tragen und die Betriebskräfte möglichst schwingungsfrei aufzunehmen. Aus diesem Grunde müssen die Führungs-Paare eine ausreichende Festigkeit und hohe Dämpfungseigenschaften senkrecht und parallel zur Führungsbahn besitzen. Diese Forderungen werden in besonders günstiger Weise von Gleitführungen erfüllt, die jedoch die Nachteile eines relativ großen Reibungskoeffizienten mit dementsprechend hohen Antriebsleistungen und ferner des sog. "stick-slip"-Effekts haben, welcher auf die plötzliche Änderung des Reibungskoeffizienten beim Übergang von Haftreibung in Gleitreibung zurückzuführen ist und sich insbensondere bei kleinsten Vorschubbewegungen nachteilig bemerkbar macht. Ein weiterer Nachteil liegt darin, daß die Gleitlager nicht paarweise gegeneinander vorgespannt werden können, so daß bei der Herstellung ihrer Gleitflächen und der Führungsbahn höchste Bearbeitungsgenauigkeiten eingehalten werden müssen. Bei großen Betriebslasten tritt an der Führung eines Führungspaars ein Spiel auf, das auf die elastische Verformung der Einzelteile der Führung zurückzuführen ist. Um den Reibungskoeffizienten zu verringern, werden häufig spezielle Gleitbeläge aus Kunststoff oder Verbundwerkstoffen benutzt, die offene Ölnuten aufweisen, um den hydrostatischen Trageffekt des eingepreßten Öls ausnutzen zu können. In der Praxis hat es sich jedoch gezeigt, daß im Langzeitbetrieb die Werkstoffe dieser Gleitbeläge quellen, was die Leichtgängigkeit und auch Genauigkeit der Führung beeinträchtigt. Beheben lassen sich durch ungenaue Bearbeitung und/oder Quellen der Gleitbeläge hervorgerufene Führungsfehler nur durch den Ausbau und das Nacharbeiten der Führungen, die von der Werkzeugmaschine mit großem Arbeitsaufwand abgebaut werden müssen.

Aus der FR—A—1 073 668 sind verschiedene Ausführungen von Wälzkörperumlauf-Geradführungen der angegebenen Gattung bekannt, bei denen die Wälzkörper in einer Umlaufbahn geführt sind, die in einem Führungsschuh entweder in Form einer geschlossenen Schleife in der Auflagefläche oder als Endlosbahn vertikal zur Führungsfläche verläuft. Bei der letztgenannten Ausführung ist in der Sohle des Führungsschuhs ein Ausschnitt vorgesehen, der einen Teil der Wälzkörperumlaufbahn bildet. Die Führungsschuhe dieser bekannten Geradführung können eine ballige Rückfläche aufweisen, an welcher ein Einstellkeil mit einer entsprechend hohl geformten Gegenfläche anliegt. Durch axiale Einstellbewegungen des Keils kann eine vorgewählte Vorspannung des Führungspaars mit einer selbsttätigen Lageausrichtung des Führungsschuhs an die Gegenführungsfläche erreicht werden. Diese bekannten Wälzführungen zeichnen sich durch hohe Führungsgenauigkeit, hohe Tragfähigkeit, Ein- und Nachstellbarkeit, leichten Lauf und durch geringe Anlaufreibung ohne "stick-slip"-Effekt aus. Ihr Nachteil liegt jedoch in der mangelhaften Dämpfung, was sich insbesondere bei hohen Belastungen in Form von unerwünschten Schwingungen auswirkt.

Aus dem DE—U—1 968 859 (Hanns Fickert KG) ist ein Lager mit Kugelführung bekannt, bei dem eine Vielzahl von Kugeln in einer relativ langen Käfigbuchse vorzugsweise aus Kunststoff derart angeordnet sind, daß die Kugeln innen an dem einen zylindrischen Maschinenteil und außen an einer axial relativ beweglichen Stahlbuchse anliegen. Dadurch ergeben sich axiale Relativbewegungen einmal zwischen dem inneren zylindrischen Bauteil, der die Kugel enthaltenden Lagerbuchse und der Stahlbuchse, wobei die Vorschubstrecke der mittleren Lagerbuchse halb so groß wie die gesamte Axialbewegung zwischen dem zylindrischen Innenteil und der äußeren Stahlbuchse ist.

Schließlich ist aus der DE—A—32 28 762 ein Wälzlager zur längsbeweglichen Lagerung eines Bauteils mit einer geraden Laufbahn bekannt, bei welchem eine Wälzkörperumlaufbahn in einem zylindrischen Führungsschuh angeordnet ist, der zwei diametral gegenüberliegende Ausschnitte aufweist, die gerade Laufbahnabschnitte bilden. Der zylindrische Führungsschuh ist in eine einseitig offene Zylinderbohrung in einem Gehäuse eingesetzt, wobei die Längsachse des Führungsschuhs zur Achse der Zylinderbohrung geringfügig gegeneinander geneigt sind. Dieses bekannte Lager kann zwar ohne zusätzliche, die Bauhöhe beeinflußende Bauteile in einfacher Weise mit Vorspannung montiert werden, es hat jedoch die allen Wälzlagertypen eigenen Nachteile einer für bestimmte Einsatzfälle zu geringen Dämpfung.

Um die Vorteile von Gleitlagern und Wälzlagern auszunutzen, sind bereits auch Geradführungen als kombinierte Gleit-Wälzführungen z.B. für den Support von Karusseldrehmaschinen (Firma Schiess AG, Düsseldorf) gebaut worden, bei denen jeweils gesonderte Gleitschuhe und Rollenumlaufschuhe mit eigenen Führungsbahnen verwendet werden. Dies erfordert einen beträchtlichen Aufwand bei der Herstellung der verschiedenen Führungsbahnen sowie langwierige Einstellarbeiten des gesamten Führungssystems. Darüber hinaus können die eingangs genannten Nachteile der Gleitführungen nicht beseitigt werden.

Aufgabe der Erfindung ist es, eine Geradführung für insbesondere die bewegten Teile von Werkzeugmaschinen zu schaffen, die auf konstruktiv einfache Weise die jeweiligen Vorteile von Gleitführungen und von Wälzführungen ohne deren artspezifische Nachteile in sich vereinigt, d. h. die je nach Art und Größe der aufzunehmenden Belastung die Eigenschaften von Gleitführungen und von Wälzführungen aufweist.

Diese Aufgabe wird erfindungsgemäß durch die kennzeichnenden Merkmale des Patentanspruchs 1 gelöst.

Durch die Kombination eines Wälzkörperumlaufs mit einer Gleitfläche ergibt sich eine Aufteilung der von den Führungselementen aufzunehmenden Last auf den Wälzkörperumlauf sowie auf die Gleitfläche, wodurch die besonderen Vorteile beider Führungskonzepte gleichzeitig zum Tragen kommen, ohne daß deren jeweilige Nachteile praktisch ins Gewicht fallen. Diese Lastverteilung kann durch entsprechende Ausbildung der Rollenumlaufbahn im Führungsschuh, d. h. durch ein mehr oder weniger weites Vorstehen der Rollen über die Gleitfläche unter Beachtung der Federungscharakteristik des Führungsschuhs, beeinflußt werden, und zwar in Abstimmung auf die jeweils gewünschte Vorspannkraft.

Eine zweckmäßige Ausgestaltung der Erfindung nach Anspruch 2 bietet den Vorteil, daß durch eine Axialbewegung des Einstellbolzens, z. B. mittels einer Stellschraube, die gewünschte Vorspannung aufgebracht wird und gleichzeitig eine selbsttätige Lageanpassung des Führungsschuhs an die Gegenfläche der Führungsbahn erfolgt. Die ballige Rückfläche des als solcher bekannten Führungsschuhs in Verbindung mit der gewölbten Gegenfläche des Keils bildet ein zylindrisches Pfannenlager, das eine Einstellbewegung des Gleitschuhs um eine quer zur Gleitschuhlängsachse parallel zur Gleitfläche verlaufende Achse ermöglicht. Die Zylinderform des Einstellbolzens und seine genaue Einpassung in die Bohrung des Maschinenteils erlaubt Verdrehbewegungen des Gleitschuhs um die Bolzenlängsachse und der Droppelkeil ergibt schließlich bei Axialbewegungen des Bolzens Zustellbewegungen des Führungsschuhs senkrecht zur Gegenfläche.

Aus herstellungstechnischen Gründen ist der Führungsschuh zweckmäßig längsgeteilt ausgeführt und an seiner Sohle mit einem Gleitbelag beschichtet (Ansprüche 5, 6). Die zweiteilige Ausbildung des Führungsschuhs ermöglicht die problemlose Einarbeitung der Führungsbahn, wobei nach Einlegen der durch Käfige gegeneinander abgestützten Wälzkörper die beiden Führungsschuhteile vor dem Aufbringen des Gleitbelages auf die Sohle fest miteinander verbunden werden.

Gemäß einer weiteren zweckmäßigen Ausgestaltung der Erfindung ist im gradlinigen Abschnitt der Wälzkörper-Umlaufbahn ein elastisches Glied vorgesehen, an dem sich die Wälzkörper in diesem Abschnitt abstützen. Eine gezielte elastische Abstützung der Wälzkörper im gradlinigen Bahnabschnitt kann auch dadurch erzielt werden, daß im Inneren des Führungsschuhs eine Ausnehmung eingearbeitet ist, die sich parallel zum gradlinigen Bahnabschnitt erstreckt. Dadurch wird ein Stützsteg im Führungsschuh gebildet, dessen Eigenelastizität — je nach der Wandstärke dieses Steges — die gezielte elastische Abstützung der im gradlinigen Bahnabschnitt befindlichen Wälzkörper ermöglicht.

Beträchtliche Probleme können bei Linearführungen von Maschinenteilen, wie Supports, Tischen und Spindelstöcken, dann auftreten, wenn sich bei der Abnahme oder im Betrieb herausstellt, daß die am ortsfesten Maschinenteil, z. B. am Ständer oder am Bett, starr befestigten Führungsleisten nicht genau gegeneinander und/oder zur Vertikalen bzw. zur Horizontalen ausgerichtet sind. Durch Bearbeitung nur der Gleit- bzw. Führungsflächen der Führungselemente des bewegbaren Maschinenteils lassen sich die dadurch verursachten Führungsfehler nicht beseitigen. Vielmehr ist es notwendig, die z. B. angeschweißten Führungsleisten vom ortsfesten Maschinenteil abzubauen, um sie separat auf entsprechenden Maschinen nacharbeiten zu können. Insbesondere wenn diese Fehler erst bei der Endabnahme oder im Betrieb festgestellt werden, müssen eine Vielzahl von Aggregaten und Bauteilen demontiert werden, bevor die Führungsleisten vom Ständer oder Bett gelöst werden können. Es wurde bereits versucht, dieses Problem durch Stellkeile zu lösen, die an bestimmten Stellen zwischen dem ortsfesten Maschinenteil und den Rückflächen der Führungsleisten eingebaut werden. Zwar ermöglichen diese Stellkeile eine einachsige Zustellung der Führungsleisten und damit auch eine Einstellung der Vorspannung, eine selbsttätige Lageanpassung der jeweils zusammenwirkenden ebenen Gleitflächen der beiden Führungselemente ist jedoch nicht möglich. Es bleibt daher die Notwendigkeit, in einer Reihe von Fällen die Führungsleisten von dem ortsfesten Machinenteil abzubauen und separat zu richten, z. B. nachzuschleifen, was die vorstehend angesprochenen umfangreichen Arbeiten erfordert.

Um diese aufwendigen Montagearbeiten beim An- und Abbau der Führungsleisten zu vermeiden und auch bei unterschiedlichen Betriebsverhältnissen ein hochgenaues Bewegen und Positionieren des verfahrbaren Maschinenteils zu ermöglichen, werden gemäß einer zweckmäßig en weiterbildung der enfindung die feinbearbeiteten Führungsflächen am bewegbaren Maschinenteil ausgebildet und in den entsprechenden Gegenflächen des ortsfesten Maschinenteils jeweils mindestens zwei sich selbsttätig ausrichtende Führungsschuhe mit dem Einstellmitteln vorgesehen.

Durch diese Ausbildung der Führung wird erreicht, daß die ortsfesten Führungselemente nicht mehr mit großem Arbeitsaufwand abgebaut werden müssen, wenn Führungsfehler festgestellt werden. Es ist lediglich notwendig, die Führungsschuhe mit Hilfe der von außen zugänglichen Stellschrauben entsprechend zu verstellen, wobei sich gegenüber allen anderen bekannten Keil-Verstellungen erfindungsgemäß die Führungsfläche jedes Gleitschuhs selbsttätig an den Verlauf bzw. die Lage der Führungsfläche des beweglichen Maschinenteils anpaßt.

Sind je zwei Führungsflächen an jeder Seite des bewegbaren Maschinenteils gegeneinander geneigt angeordnet (Prismenführung) und an jeder Seite des ortsfesten Maschinenteils mindestens zwei Böcke mit je einem prismatischen Ausschnitt in ihren zueinander weisenden Seiten starr befestigt, dann werden zweckmäßig in den beiden Prismenflächen jedes Bockes verstellbare Führungsschuhe angeordnet. Das Vorsehen derartiger Böcke am Maschinenständer als Führungselemente vereinfacht die Richtarbeiten. Dabei können die Böcke jeder Seite miteinander verstrebt sein. Die Prismenführung in Verbindung mit den in den Böcken angeordneten Gleitschuhen erlaubt eine besonders einfache und genaue Einstellung der Vorspanning.

Die erfindungsgemäße Führung kann auch für umlaufende und rotierende Maschinenteile, wie z. B. Drehtische, Spindeln, u. dg,. eingesetzt werden. Insbensondere können mehrere Gleitschuhe auf einem Kreisbogen zur Abstützung eines Werkstück-Drehtisches angeordnet werden, wobei die Einstellbarkeit der Gleitschuhe ein genaues Ausrichten des Drehtisches ermöglicht und die kombinierte Roll- und Gleitreibung entsprechend den auftretenden Werkstücklasten und Bearbeitungskräften eine hervorragende Dämpfung bei der spanenden Werkstückbearbeitung ergibt. Es ist auch möglich, eine Prismenführung für einen derartigen Drehtisch unter Verwendung von z. B. drei oder mehreren in je einem starr mit dem Tischunterbau befestigten Bock angeordneten Gleitschuhen pro konischer Führungsfläche des Drehtisches auszuführen. Auch bei der in dieser Weise ausgebildeten Führung und Lagerung von drehangetriebenen Maschinenteilen ergibt sich der wesentliche Vorteil, daß keine durchgehenden Führungsflächen am ortsfesten Maschinenteil vorhanden sind, die von Fall zu Fall nachgearbeitet werden müßten, sondern daß ein hohes Maß an Führungsgenauigkeit durch die Einstellmöglichkeit und durch die selbsttätige Lageanpassung der eingesetzten Gleitschuhe erreicht wird.

Im folgenden werden Ausführungsbeispiele der Erfindung anhand der Zeichnung im einzelnen beschrieben. Es zeigen:

Fig. 1 einen Längsschnitt durch die erfindungsgemäße Geradführung.

Fig. 2 die Geradführung im Querschnitt II—II in Fig. 1,

Fig. 3 eine Ansicht auf die Gleitfläche des Führungsschuhs nach Fig. 1,

Fig. 4 ein Vorspannungsdiagramm zweier gegeneinander vorgespannter Geradführungen,

Fig. 5, 6 zwei Führungsschuhe im Schnitt,

Fig. 7 schematisch den oberen Teil einer Fräsmaschine in perspektivischer Darstellung,

Fig. 8 den Schnitt A—B in Fig. 7,

Fig. 9 den oberen Teil des Ständers mit den angeschweißten Führungsböcken in perspektivischer Darstellung.

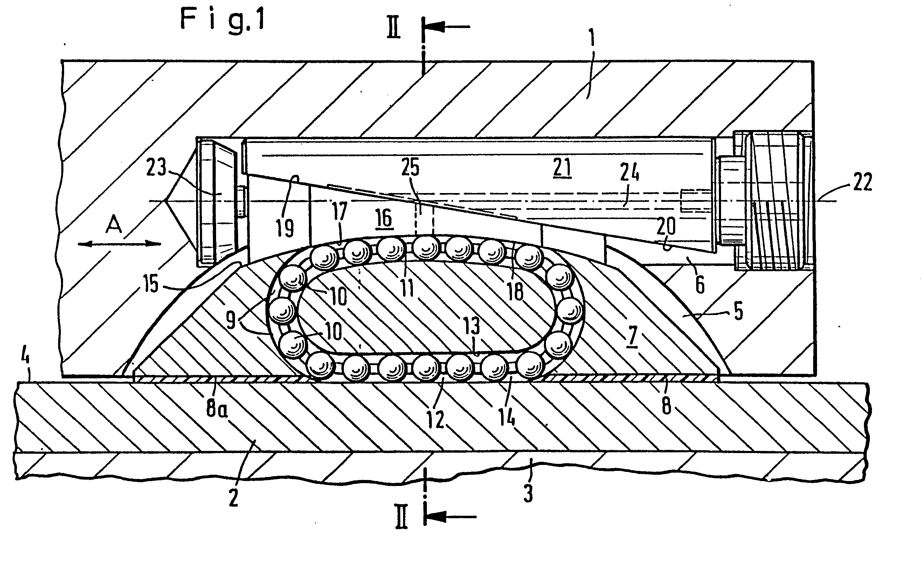

Gemäß Fig. 1 wird ein beweglicher Bauteil 1 einer Werkzeugmaschine, z. B. ein Support, ein Schlitten oder ein Spindelstock, in Richtung des Doppelpfeiles A auf einer Führungsschiene 2 eines ortsfesten Bauteils 3 linear in beiden Richtungen verfahren. Die Führungsschiene 2 besteht in der Regel aus gehärtetem Stahl und besitzt eine feinbearbeitete, z. B. geschliffene, Führungs- bzw. Gleitfläche 4. Im Bauteil 1 ist eine Ausnehmung 5 ausgebildet, in welche eine in der Zeichnung horizontal verlaufende Paßbohrung 6 ausmündet. Bei der dargestellten Ausführung hat die Ausnehmung 5 eine teilzylindrische Form und ist zur Gleitfläche 4 der Führungsschiene 2 hin offen. In dieser Ausnehmung 5 befindet sich ein Führungsschuh 7, der an seiner Sohle mit einem Gleitbelag 8 beschichtet ist. Der Gleitschuh 7 ist mit einem allseitigen freien Zwischenabstand in der Ausnehmung 5 des Bauteils 1 eingesetzt und liegt mit der Gleitfläche 8a des Gleitbelags 8 an der Gleitfläche 4 der Führungsschiene 2 großflächig an. Im Inneren des Führungsschuhs 7 ist eine endlose Rollenumlaufbahn 9 in der Zeichenebene verlaufend ausgebildet, in welcher eine Vielzahl von in Käfigen 11 gehaltenen Rollen 10 umlaufen. Der untere Teil 12 der Rollenumlaufbahn ist geradlinig ausgebildet und verläuft genau parallel zu der Gleitfläche 8a des Belages 8. Die Anordnung dieses Teils 12 der Umlaufbahn 9 ist dabei so getroffen, daß die Rollen 10 sich unter Abstützung an der Innenfläche 13 der Umlaufbahn 9, 12 — im vorgespannten Zustand — mit ihrem nach außen weisenden Umfangsteil etwa in der Ebene der Gleitfläche 8a des Belages 8 liegen. Dadurch wird erreicht, daß bei einer Belastung des Bauteils 1 z. B. senkrecht zu seiner bewegungsrichtung A die sich im Bahnteil 12 befindlichen Rollen 10 durch den Ausschnitt 14 hindurch gegen die Gleitfläche 4 der Führungsschiene 2 angedrückt werden und sich der Gleitbelag 8 zusammen mit den Rollen 10 an der Lastaufnahme beteiligen.

Wie dargestellt, weist der Führungsschuh 7 eine ballige — in diesem Fall kreisbogenförmige — Rückfläche 15 auf, an welcher ein Keil 16 mit seiner entsprechend gewölbten Gegenfläche 17 anliegt. Die Rollenumlaufbahn 9 ist dabei so geführt, daß sich auch in dieser Rückfläche 15 ein Ausschnitt 18 ergibt, so daß die in diesem rückwärtigen — oberen — Abschnitt der Rollenumlaufbahn 9 befindlichen Rollen 10 an der gewölbten Fläche 17 des Keils 16 anliegen und abrollen. Die obere Schrägfläche 19 des Keils 16 befindet sich in dichter Anlage an einer unteren entsprechend geneigten Schrägfläche 20 eines Einstellbolzens 21, der in die Bohrung 6 im Bauteil 1 genau eingepaßt ist und sich auch unter Belastung um seine Längsachse 22 verdrehen kann. Am in Fig. 1 rechten Ende dieses Einstellbolzens 21 befindet sich eine Einstell- und Vorspanneinrichtung z. B. in Form von Stellmuttern, durch deren Betätigung der Einstellbolzen 21 in Längsrichtung verschoben werden kann. In dem in Fig. 1 linken Ende der Bohrung 6 befindet sich ein Gegenhalter 23 für den Keil 16.

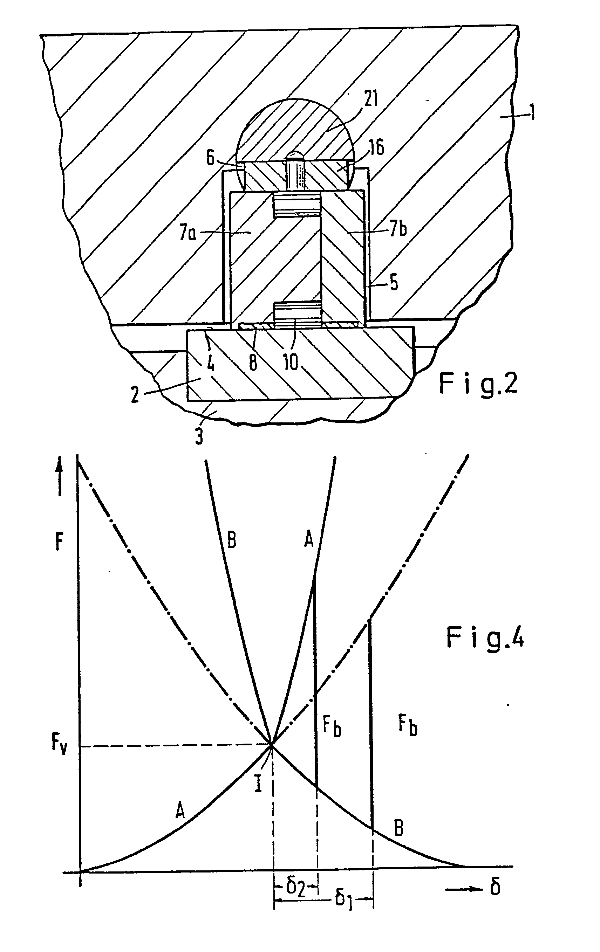

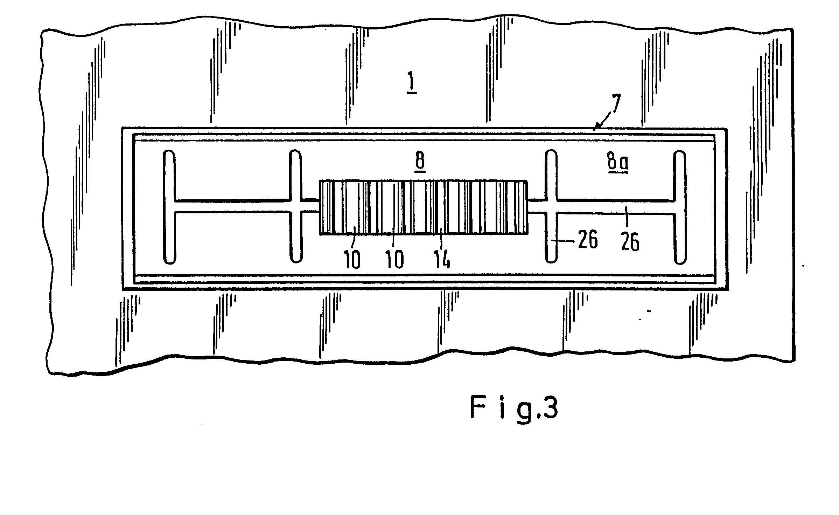

Wie insbesondere aus Fig. 2 ersichtlich, ist der Führungsschuh 7 längsgeteilt, wobei die Teilungsebene mit der einen Stirnwand der Rollenumlaufbahn zusammenfällt. Die beiden Teile 7a, 7b sind durch geeignete Mittel, z. B. durch Spannbolzen, miteinander fest verbunden, und zwar vor der Feinbearbeigung des Führungsschuhs 7 und dem Auftragen des Belages 8. Der Führungsschuh 7 hat einen rechteckigen Querschnitt, wobei die Rollenunlaufbahn 9 in Form einer vertikal im Schuh 7 ausgebildeten Endlosschleife verläuft. Zur Schmierung der Rollenbahn, der Gleitflächen und auch der Einstellfächen sind im Bolzen 21 sowie im Keil 16 Schmiermittelkanäle 24, 25 vorgesehen.

Aus Fig. 3 ist die Konfiguration des Rollenbahn-Ausschnittes 14 in der Sohle des Gleitschuhs 7 zusammen mit Schmiermittelnuten 26 im Gleitbelag 8 ersichtlich. Die Rollen 10 werden durch den Käfig 11 in üblicher Weise auf Zwischenabstand gehalten, wobei die Länge und Breite dieses Ausschnittes sowie die Größe und Anzahl der Rollen 10 je nach den Bedingungen des Einsatzfalls gewählt werden können.

Die vorstehend beschriebene Geradführung arbeitet wie folgt:

Beim Zusammenbau der Geradführung erfolgt eine flächige Anlage des Führungsschuhs 8 an der Gleitfläche 4 der Führungsschiene 2, weil sich der Führungsschuh 7 durch Gleitverschiebungen an den beiden ballingen Flächen 15, 17 um eine quer zur Zeichenebene verlaufende Achse sowie zusätzlich noch um die Mittelachse 22 des Einstellbolzens 1 verdrehen kann. Zur Erzielung der zuvor ermittelten Vorspannung wird durch äußere Betätigung der Stellmuttern der Einstellbolzen 21 axial verschoben, wodurch der Keil 16 und mit diesem der Gleitschuh 7 in Richtung auf die Gleitfläche 4 der Führungsschiene 2 gepreßt wird. Die Größe der Vorspannung und damit der Einstellbetrag des Bolzens 21 werden auf bekannte Weise entsprechend der Federungscharakteristik der Geradführung und der Größe der aufzunehmenden Belastungen ermittelt.

Dem Vorspannungs-Diagramm zweier gegeneinander vorgespannter Führungsschuhe gemäß Fig. 4 lassen sich die besonderen Eigenschaften der erfindungsgemäßen Geradführung deutlich entnehmen. Auf der Ordinate ist die Kraft F und auf der Abszisse die elastische Verformung $\delta$ aufgetragen. Die durchgezogenen Kurven A und B stellen die Federkennlinien des einen und des anderen Führungsschuhs dar. Zum Vergleich sind auch die entsprechenden Federkennlinien von zwei Rollenumlaufschuhen als strichpunktierte Kurven dargestellt. Die beiden Führungsschuhe sind mit einer Vorspannkraft $F_v$ gegeneinander vorgespannt. Im dargestellten Beispiel ist die Vorspannkraft $F_v$ so gewählt, daß die Gleitfläche der Führungsschuhe bei einer Lastzunahme gerade mit zu tragen beginnt. Dieser Zustand besteht im Schnittpunkt I, in dem die beiden Kurven A und B einen Knick haben und ab dem ihr oberer Teil mit größerer Steilheit verläuft. Dieser steilere Kurvenverlauf ergibt sich daraus, daß ab dem Punkt I, bis zu welchem die Kräfte nur von dem Rollenumlauf aufgenommen werden, zusätzlich die Gleitfläche an der Lastaufnahme beteiligt wird. Während somit der jeweils untere Teil der Kurven A, B bis zum Punkt I die Lastaufnahme — und damit die Steifigkeit — nur durch die geringfügig über die Gleitfläche vorstehenden Rollen kennzeichnet, geben die oberen Kurventeile ab dem Punkt I die gemeinsame Lastaufnahme von Rollen und Gleitfläche des jeweiligen Führungsschuhs gemäß der Erfindung an. Es ist ein wesentlicher Vorteil der Erfindung, daß die neue Geradführung bei höheren Betriebslasten eine erheblich größere Steifigkeit als herkömmliche Rollenumlaufschuhe besitzt, was ebenfalls aus Fig. 4 hervorgeht. Wie dargestellt, verformt sich eine herkömmliche vorgespannte Geradführung mit Rollenumlauf unter einer Betriebeslast $F_b$ um den Betrag $\delta_1$. Die erfindungsgemäße Geradführung verformt sich jedoch wegen der steileren Kurven A bzw. B nur um den Betrag $\delta_2$. Mit der größeren Steifigkeit steigt jedoch nicht die Reibung in gleichem Maße, weil die jeweils entlastete Geradführung — unterer Teil der Kurve B — den ihr zufallenden Teil der betriebslast $F_b$ nur mit den Rollen trägt. Die gute Dämpfungswirkung ist auf die Gleitflächen-Lastaufnahme der anderen Führung — oberer Teil der Kurve A — zurückzuführen.

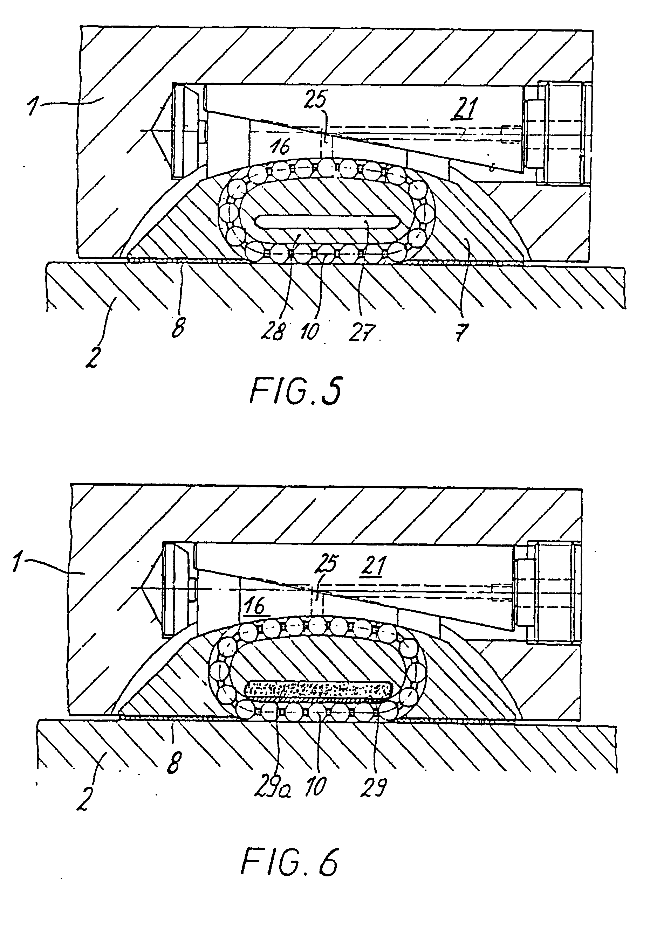

Die Führung nach Fig. 5 unterscheidet sich von den Führungen gemäß Fig. 1 bis 3 nur durch eine andere Ausbildung des Führungsschuhs. Zur Erzielung einer bestimmten elastischen Abstützung der Wälzkörper 10 im Bereich des wirksamen gradlinigen Abschnittes 13 der geschlossenen Wälzkörperumlaufbahn 9 ist im Inneren des Führungsschuhs 7 eine Ausnehmung 27 eingearbeitet. Der verbleibende Steg 28 zwischen dieser Ausnehmung 27 und dem geraden Abschnitt der Umlaufbahn bewirkt die gewünschte federnde Abstützung der Wälzköorper.

Die Ausführung nach Fig. 6 unterscheidet sich von derjenigen nach Fig. 5 nur dadurch, daß die Ausnehmung 27 bis zum gradlinigen Abschnitt der Umlaufbahn heranreicht und daß als Abstützung für die Wälzkörper 10 eine Platte 29 in diesem Abschnitt angeordnet ist, wobei der weitere Innenraum der Ausnehmung mit einer Einlage 29a aus einem geeigneten Material mit gewünschten elastischen Eigenschaften gefüllt ist.

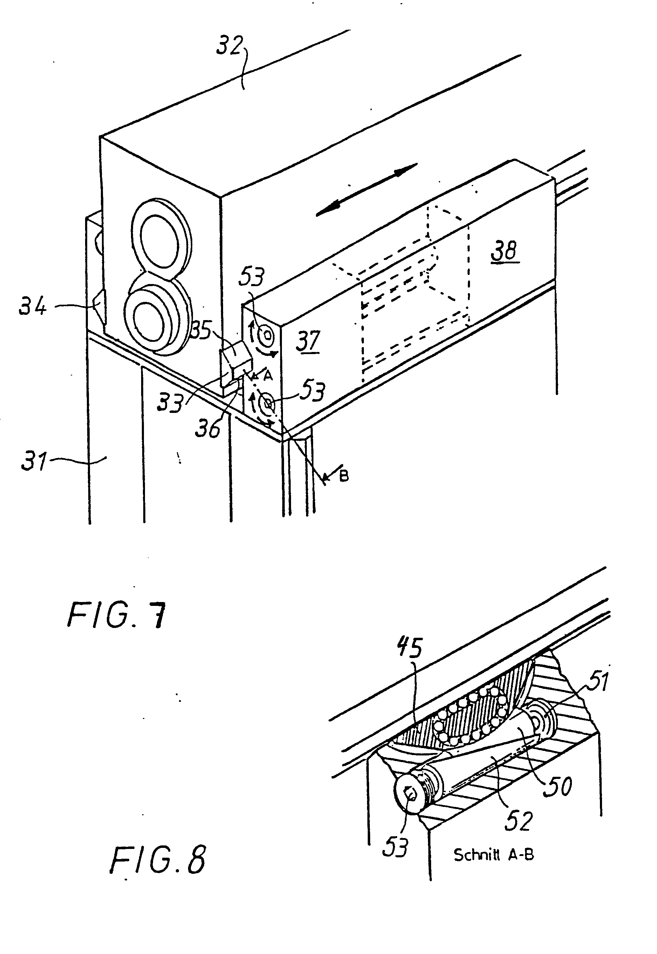

Gemäß Fig. 7 ist auf der Oberfläche eines Ständers 31 ein Spindelstock 32 in Richtung des Doppelpfeiles verfahrbar angeordnet. An jeder Längsseite des Spindelstockes 32 ist je eine prismatische Führungsschiene bzw. — leiste 33, 34 befestigt. Jede Führungsleiste 33, 34 weist eine obere und eine untere Führungsfläche 35, 36 auf, die um gleiche Winkelbeträge gegeneinander geneigt sind.

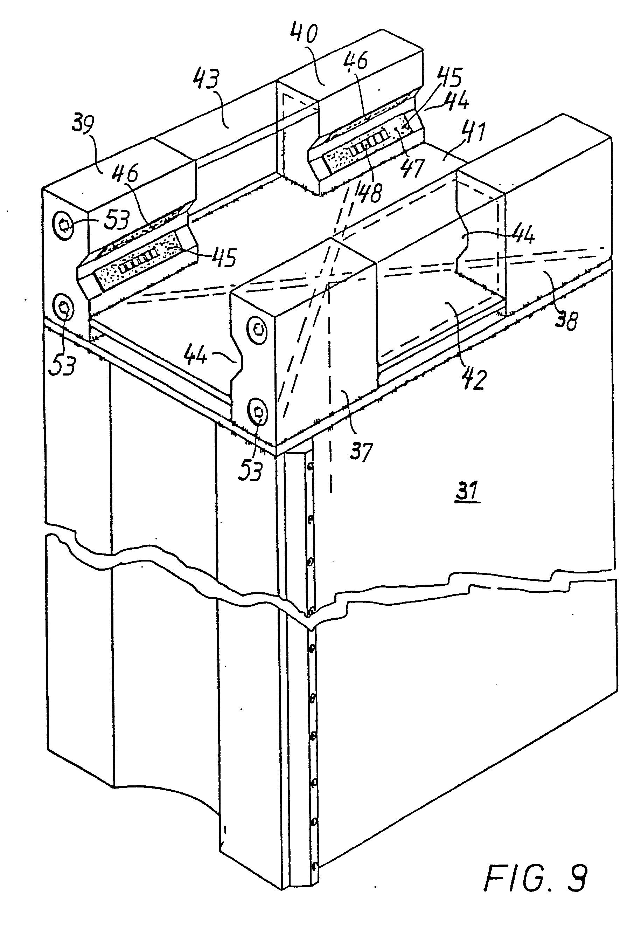

Zu beiden Seiten des verfahrbaren Spindelstockes 32 sind auf dem Ständer 31 je zwei Böcke 37, 38 und 39, 40 jeweils gegenüberliegend starr befestigt, z. B. angeschweißt, und durch eine zusätzliche Platte 41 gegeneinander abgestützt. Zur weiteren Versteifung können die Böcke 37, 38 bzw. 39, 40 jeder Seite durch Zwischenstücke 42, 43 miteinander verbunden sein. In den zueinander weisenden Seiten jedes Bockes ist je ein Ausschnitt 44 eingearbeitet, dessen prismatische Form der der Führungsleisten 33 entspricht. Wie insbesondere in Fig. 9 gezeigt, sind in jedem Bock je zwei Rührungsschuhe 45, 46 angeordnet, deren Gleitfläche 47 mit den Wälzkörpern 48 sich in den Seitenflächen des Ausschnitts erstrecken und mit den schrägen Führungsflächen 35, 36 der jeweiligen Spindelstock-Führungsleiste 33, 34 zusammenwirken. Wie aus Fig. 8 ersichtlich, ist jeder Führungsschuh in einer Ausnehmung im zugeordneten Bock 37 bis 40 beweglich aufgenommen und stützt sich mit seiner rückwärtigen teilzylindrischen Fläche an einer entsprechend geformten Gegenfläche eines Keils 50 ab, der in einer entsprechenden Bockausnehmung gegen Axialverschiebungen durch ein Druckstück 51 gehalten ist. An der Schrägfläche des Keils 50 liegt ein zylindrischer Schaft 52 mit einer schrägen Gegenfläche an, der mittels einer von außen zugänglichen Stellschraube 53 axial verschoben werden kann, um durch die Keilwirkung den Gleitschuh in Richtung auf die Führungsfläche der entsprechenden Führungsleiste vorzuschieben.

Die Erfindung ist nicht auf das dargestellte Ausführungsbeispiel beschränkt. So muß die Rollenumlaufbahn nicht in der dargestellten Weise vertikal verlaufen, sondern die gesamte endlose Umlaufbahn kann auch ausschließlich horizontal im unteren Teil des Führungsschuhs angeordnet sein, wodurch dann zwei zueinander parallele Ausschnitte mit bogenförmiger Endumführung für die Rollen entstehen. Bei dieser Ausführung kann der Führungsschuh auch einstückig ausgebildet sein, weil die Rollenumlaufbahn sich von der Sohlenfläche aus einarbeiten läßt. Schließlich ist es auch möglich, die Bohrung und damit auch den Einstellbolzen quer zur Bewegungsrichtung A des Maschinenteils anzuordnen, was dann jedoch auch eine um 90° verdrehte Lage der beiden gewölbten Flächen zur Folge hätte.

Durch die freie Wählbarkeit der Lastverteilung zwischen Roll- und Gleitreibung können die erfindungsgemäßen Geradführungen an besondere Betriebsbedingungen bzw. spezielle Maschinenteile optimal angepaßt werden, was bei bisherigen Geradführungen nicht möglich war.

**Patentansprüche**

1. Einstellbare Wälzkörperumlauf-Geradführung für insbesondere Werkzeugmaschinen, mit mindestens einem an einem der beiden relativbewegbaren Maschinenteile (1; 32) durch Vorspann- und Einstellmittel mehrachsig verstellbar angeordneten Führungsschuh (7; 45), der in seiner Sohle einen Ausschnitt (14) als Teil einer Wälzkörperumlaufbahn (9) aufweist und auf der Oberfläche einer am anderen Maschinenteil (3; 31) befestigten Führungsschiene (2; 33, 34) abgestützt ist, dadurch gekennzeichnet, daß die Sohle jedes Führungsschuhs (7; 45) als Gleitfläche (8a; 47) ausgebildet ist und daß die Wälzkörperumlaufbahn (9) im Bereich des Ausschnitts (14) so ausgebildet ist, daß die Wälzkörper (10; 48) und die Gleitfläche (8a; 47) an der Belastungsaufnahme mit sich lastabhängig ändernden Anteilen beteiligt sind.

2. Wälzkörperumlauf-Geradführung nach Anspruch 1, bei welcher der in einer Ausnehmung (5; des einen Maschinenteils (1) angeordnete Führungsschuh (7) mit seiner balligen Rückfläche (17) an der gewölbten Gegenfläche eines Keils (16) anliegt, dadurch gekennzeichnet, daß in einer parallel zur Gleitfläche (8a) in dem einen Maschinenteil (1) verlaufenden Bohrung (6) ein Einstellbolzen (21) um seine Längsachse (22) verdrehbar eingepaßt ist, an dessen vorderer Schrägfläche (20) der Keil (16) anliegt.

3. Wälzkörperumlauf-Geradführung nach Anspruch 2, dadurch gekennzeichnet, daß zum Einstellen der Vorspannung am Stellbolzen (21) eine Stellmutter angreift.

4. Wälzkörperumlauf-Geradführung nach einem der Ansprüche 1 bis 3, dadurch gekennzeichnet, daß die Wälzkörperumlaufbahn (9) senkrecht zur Gleitfläche (8a; 47) im Führungsschuh (7; 45) verläuft.

5. Wälzkörperumlauf-Geradführung nach Anspruch 4, dadurch gekennzeichnet, daß der Führungsschuh (7) im Bereich der Wälzkörperumlaufbahn (9) längsgeteilt ist.

6. Wälzkörperumlauf-Geradführung nach einem der Ansprüche 1 bis 5, dadurch gekennzeichnet, daß die Sohle des Führungsschuhs (7; 45) mit einem Gleitbelag (8) beschichtet ist, in dessen Gleitfläche (8a) Schmiernuten (26) vorgesehen sind.

7. Wälzkörperumlauf-Geradführung nach einem der Ansprüche 1 bis 6, dadurch gekennzeichnet, daß die Führungsschienen mit den feinbearbeiteten Führungsflächen (35, 36) am bewegbaren Maschinenteil (32) ausgebildet sind und daß in den entsprechenden Gegenflächen des ortsfesten Maschinenteils (31, 37 bis 40) jeweils mindestens zwei sich selbsttätig ausrichtende Führungsschuhe (45) mit den jeweils zugehörigen Vorspann- und Einstellmitteln (50 bis 53) vorgesehen sind.

8. Wälzkörperumlauf-Geradführung nach Anspruch 7, bei der je eine Führungsschiene (33, 34) mit zwei gegeneinander geneigten Führungsflächen (35, 36) an jeder Seite des bewegbaren Maschinenteils (32) angeordnet ist (Prismenführung), dadurch gekennzeichnet, daß an jeder Seite des ortsfesten Maschinenteils (31) mindestens zwei Böcke (37, 38; 39, 40) mit je einem prismatischen Ausschnitt (44) in den zueinander weisenden Seiten starr befestigt sind und daß in den beiden Prismenflächen jedes Bock-Ausschnitts (44) je ein verstellbarer Führungsschuh (45) angeordnet ist.

9. Wälzkörperumlauf-Geradführung nach Anspruch 7 oder 8 für den drehbewegbaren Maschinenteil einer Werkzeugmaschine, z. B. für einen Drehtisch, dadurch gekennzeichnet, daß am drehbewegbaren Maschinenteil mindestens eine ringförmige feinbearbeitete Führungsfläche ausgebildet ist und daß am ortsfesten Maschinenteil mehrere sich selbsttätig ausrichtende Gleitschuhe auf einem Kreis in einer formsteifen Halterung versellbar angeordnet sind.

10. Wälzkörperumlauf-Geradführung nach einem der Ansprüche 1 bis 9, dadurch gekennzeichnet, daß jeder Führungsschuh im geradlinigen Bahnabschnitt seiner Kugelumlaufbahn ein elastisches Glied (28) aufweist, an dem sich die Wälzkörper (10) abstützen.

11. Wälzkörperumlauf-Geradführung nach Anspruch 10, dadurch gekennzeichnet, daß im Inneren des Führungsschuhs (7) eine Ausnehmung (22) eingearbeitet ist, die sich parallel zum geradlinigen Abschnitt (13) der Wälzkörperumlaufbahn (9) erstreckt.

**Revendications**

1. Guide rectiligne à circulation de corps roulants, réglable, notamment pour machines-outils, comportant au moins, agencé avec possibilité de modifier sa position par des moyens de précontrainte et de réglage, sur l'une des deux parties de machine mobiles l'une par rapport à l'autre (1; 32), un sabot de guidage (7; 45) qui présente dans sa semelle une découpe (14) en tant que partie d'une piste de circulation (9) de corps roulants et prend appui sur la surface d'un rail de guidage (2; 33, 34) fixé à l'autre partie de machine (3; 31), caractérisé par le fait que la semelle de chaque sabot de guidage (7; 45) est aménagée en tant que surface de glissement (8a; 47) et par le fait que la piste de circulation de corps roulants (9) est aménagée dans la région de la découpe (14) de manière telle que les corps roulants (10; 48) et la surface de glissement (8a; 47) participent à la réception de la charge dans des proportions changeant en fonction de la charge.

2. Guide rectiligne à circulation de corps roulants selon revendication 1, dans lequel le sabot de guidage (7) agencé dans un évidement (5) de la première partie de machine (1) s'applique, par sa surface dorsale bombée (17), contre la surface conjuguée courbée d'un coin (16), caractérisé par le fait qu'une tige de réglage (21) est adaptée, avec possibilité de rotation autour de son axe longitudinal (22), dans un alésage (6) s'étendant dans la première partie de machine (1), parallèlement à la surface de glassement (8a), le coin (16) s'appliquant contre la surface avant oblique (20) de cette tige.

3. Guide rectiligne à circulation de corps roulants selon revendication 2, caractérisé par le fait qu'un écrou de réglage attaque la tige de réglage (21), pour régler la précontrainte.

4. Guide rectiligne à circulation de corps roulants selon l'une des revendications 1 à 3, caractérisé par le fait que la piste de circulation de corps roulants (9) s'étend, dans le sabot de guidage (7; 45), perpendiculairement à la surface de glissement (8a; 47).

5. Guide rectiligne à circulation de corps roulants selon revendication 4, caractérisé par le fait que le sabot de guidage (7) est portagé longitudinalement dans la région de la piste de circulation de corps roulants (9).

6. Guide rectiligne à circulation de corps roulants selon l'une des revendications 1 à 5, caractérisé par le fait que la semelle du sabot de guidage (7; 45) est revêtue d'une garniture pour glissement (8) dans la surface de glissement (8a) de laquelle sont prévues des rainures de lubrification (26).

7. Guide rectiligne à circulation de corps roulants selon l'une des revendications 1 à 6, caractérisé par le fait que les rails de guidage avec les surfaces de guidage (35, 36) ayant subi un usinage de finition fine sont aménagés sur la partie mobile (32) de la machine et par le fait que, dans les surfaces conjuguées correspondantes de la partie fixe (31, 37 à 40) de la machine sont prévus à chaque fois au moins deux sabots de guidage (45) s'orientant automatiquement, chacun avec les moyens de précontrainte et réglage (50 à 53) correspondants.

8. Guide rectiligne à circulation de corps roulants selon revendication 7, dans lequel un rail de guidage (33, 34) doté de deux surfaces de guidage (35, 36) inclinées l'une par rapport à l'autre est agencé de chaque côté de la partie mobile (32) de la machine (guidage prismatique), caractérisé par le fait que dans chaque côté de la partie fixe (31) de la machine sont fixés rigidement au moins deux supports (37, 38; 39, 40) ayant chacun une découpe prismatique (44), cela dans les côtés mutuellement en regard, et par le fait que dans les deux surfaces prismatiques de chaque découpe (44) d'un support est agencé un sabot de guidage (45) à position ajustable.

9. Guide rectiligne à circulation de corps roulants selon revendication 7 ou 8, pour la partie mobile en rotation d'une machine-outil, par exemple pour une table tournante, caractérisé par le fait qu'au moins une surface de guidage annulaire, ayant subi un usinage de finition fine, est aménagée sur la partie mobile en rotation de la machine, et par le fait que plusieurs sabots de glissement s'orientant automatiquement sont agencés sur un cercle, avec possibilité de réglage de position, dans une monture rigide, sur la partie fixe de la machine.

10. Guide rectiligne à circulation de corps roulants selon l'une des revendications 1 à 9, caractérisé par le fait que chaque sabot de guidage présente, dans la portion rectiligne de sa piste de circulation de billes, un élément élastique (28) sur lequel les corps roulants (10) prennent appui.

11. Guide rectiligne à circulation de corps roulants selon revendication 10, caractérisé par le fait qu'un évidement (22) s'étendant parallèlement à la portion rectiligne (13) de la piste de circulation (9) des corps roulants est aménagé à l'intérieur du sabot de guidage (7).

**Claims**

1. Adjustable circulating roller rectilinear guide, particularly for machine tools, comprising at least one guide shoe (7; 45), which is arranged so that it can be adjusted about more than one axis at one of the two machine parts (1; 32), which can move in a relative manner, by preloading and adjusting means, which shoe comprises in its sole an aperture (14) as part of a circulating roller track (9) and is supported on the surface of a guide rail (2; 33, 34) which is secured to the other machine part (3; 31), characterised in that the sole of each guide shoe (7; 45) is formed as a slide surface (8a; 47), and that the circulating roller track (9) is formed in the area of the aperture (14) such that the rollers (10; 48) and the slide surface (8a; 47) play a part in bearing the load to a proportion which varies in accordance with the load.

2. Circulating roller rectilinear guide according to claim 1, in which the guide shoe (7), which is arranged in a recess (5) of one machine part (1), bears with its spherical rear surface (17) against the curved countersurface of a key (16), characterised in that an adjusting bolt (21) is fitted in a bore (6), which extends parallel to the slide surface (8a) in one machine part (1), such that it can turn about its longitudinal axis (22), the key (16) bearing against the front inclined surface (20) of this bolt.

3. Circulating roller rectilinear guide according to claim 2, characterised in that an adjusting nut acts on the adjusting bolt (21) in order to adjust the preloading force.

4. Circulating roller rectilinear guide according to one of claims 1 to 3, characterised in that the circulating roller track (9) extends perpendicular to the slide surface (8a; 47) in the guide shoe (7; 45).

5. Circulating roller rectilinear guide according to claim 4, characterised in that the guide shoe (7) is divided in the longitudinal direction in the area of the circulating roller track (9).

6. Circulating roller rectilinear guide according to one of claims 1 to 5, characterised in that the sole of the guide shoe (7; 45) is provided with a slide coating (8), the slide surface (8a) of which is provided with lubrication grooves (26).

7. Circulating roller rectilinear guide according to one of claims 1 to 6, characterised in that the guide rails with the finely machined guide surfaces (35, 36) are formed on the mobile machine part (32), and that at least two self-aligning guide shoes (45) with the respective associated preloading and adjusting means (50 to 53) are in each case provided in the corresponding countersurfaces of the stationary machine part (31, 37 to 40).

8. Circulating roller rectilinear guide according to claim 7, in which a respective guide rail (33, 34) with two guide surfaces (35, 36), which are inclined towards one another, are arranged on each side of the mobile machine part (32) (V-guide), characterised in that at least two blocks (37, 38; 39, 40) with a respective prismatic aperture (44) in the facing sides are rigidly secured to each side of the stationary machine part (31), and that a respective adjustable guide shoe (45) is arranged in the two prism faces of each block aperture (44).

9. Circulating roller rectilinear guide according to claim 7 or 8 for the rotatable machine part of a machine tool, e.g. for a rotary table, characterised in that at least one annular, finely machined guide surface is formed on the rotatable machine part, and that a plurality of self-aligning sliding shoes are arranged in an adjustable manner in a circle in a dimensionally stable holder on the stationary machine part.

10. Circulating roller rectilinear guide according to one of claims 1 to 9, characterised in that each guide shoe comprises a resilient member (28) in the rectilinear section of its circulating roller track, at which member the rollers (10) are supported.

11. Circulating roller rectilinear guide according to claim 10, characterised in that a recess (22), extending parallel to the rectilinear section (13) of the circulating roller track (9), is worked into the inside of the guide shoe (7).

EP 0 171 700 B1

Fig.1

EP 0 171 700 B1

F i g.2

F i g.4

Fig.3

EP 0 171 700 B1

EP 0 171 700 B1

FIG.5

FIG.6

4

FIG. 7

FIG. 8

Schnitt A-B

40
46
43
45
44
39
41
46
53
47
45
48
44
53
44
38
42
37
53
31

FIG. 9